# EUROPEAN PATENT APPLICATION

(11) **EP 0 571 876 A1**
(43) Date of publication of application: **01.12.1993**
(21) Application number: 93108080.8
(22) Date of filing: 18.05.1993
(51) Int. Cl.: B29C 69/00, B60K 15/03

(54) **Autovehicle fuel tank and its manufacturing process**

(30) Priority: 29.05.1992 IT TO920462
(71) Applicant: FIAT AUTO S.p.A., I-10135 Torino (IT)
(72) Inventor: Da Re', Mario, I-10100 Torino (IT)
(74) Representative: Lotti, Giorgio

(57) **Abstract**

An autovehicle fuel tank is described, obtained by joining complementary half shells (10,11), provided with respective flattened edges (14,15) suitable for bonding. The half shells are made of polymeric thermoplastic or thermosetting material by means of injection molding using a vertical press with a mold consisting of two plates (30,31) and of an extractable punch (32) which creates, together with the plates, two molding cavities for the respective half shells (10,11). The tank is provided with a flattened auxiliary frame (12), supporting a set of accessories (18,19), and having a profile corresponding to that of the edges (14,15), and on said frame surfaces (20,21) the bonding material is applied; the frame (12) is interposed between the edges (14,15) of the half shells (10,11).

## Description

This invention refers to an autovehicle fuel tank made of plastic by means of injection molding.

At present plastic tanks for autovehicles are made using blow-molding technology which allows complex shapes to be realized and a whole shell to be obtained in a single operation.

The material used is in general high density ultrahigh-molecular-weight polyethylene (HDPE-HMW), which guarantees the necessary mechanical properties for the tank.

However blow-molding manufacturing technology has some disadvantages:
1) a closed shell is obtained into which holes must then be made through which the devices (float, electric pump, pipes and various cables) are placed;
2) Consistent shell thickness cannot be obtained; therefore, in order to guarantee a minimum thickness throughout the body, greater thicknesses must be accepted in some sections with consequent waste of material and an increase in weight;
3) There is notable scrap, comparable in weight to that of the tank produced.
Furthermore, polyethylene is a porous material for which it is necessary to take further steps in order to make the tank walls impermeable to fuel.
There are two alternative technologies used for impermeabilization, which are respectively:
1) the creation of a chemical barrier through the treatment of the tank's internal surface with F2N2 (fluorite), which alters the polyethylene molecular structure thus rendering it more compact;
2) the creation of a polymeric barrier through the addition of a polyamide called SELAR to the polyethylene's mass during fusion. A tank wall is obtained which in cross section presents polyamide laminar intrusions in the polyethylene mass, which guarantees the necessary fuel impermeability.

The aim of this invention is the realization of a tank by molding, on a vertical press, two half shells using polymeric thermosetting or thermoplastic material.

For the realization of the half shells reference is made to the molding procedure already known through patent application N° 67299-A/88 dated April 5th 1988 by this same applicant. This procedure foresees the molding of the two polymeric shells for box-type elements and is carried out by means of a vertical press equipped with a mold having a punch interposed between the two plates to create with each plate a molding cavity.

Another aim of this invention is to obtain a fuel tank using different types of materials, so taking advantage of a process which allows the inconveniences mentioned above to be eliminated and production times to be reduced.

For these and other aims and advantages, which will be better understood later, the invention proposes the realization of a tank with the characteristics highlighted in claim 1 and a process for its realization according to claim 5.

The structural and functional characteristics of a preferred, but not limiting, embodiment of the tank according to this invention, will be described with reference to the enclosed drawings, in which:
Figure 1 diagramatically shows a vertical section of the two half shells of which the tank is composed, placed in a vertical press during the manufacturing phase.
Figure 2 is a prospective view of the two half shells of figure 1 once formed, seperately shown in order to highlight some of their details; and Figure 3 diagramatically shows an auxiliary frame which is used to complete the tank according to the invention.

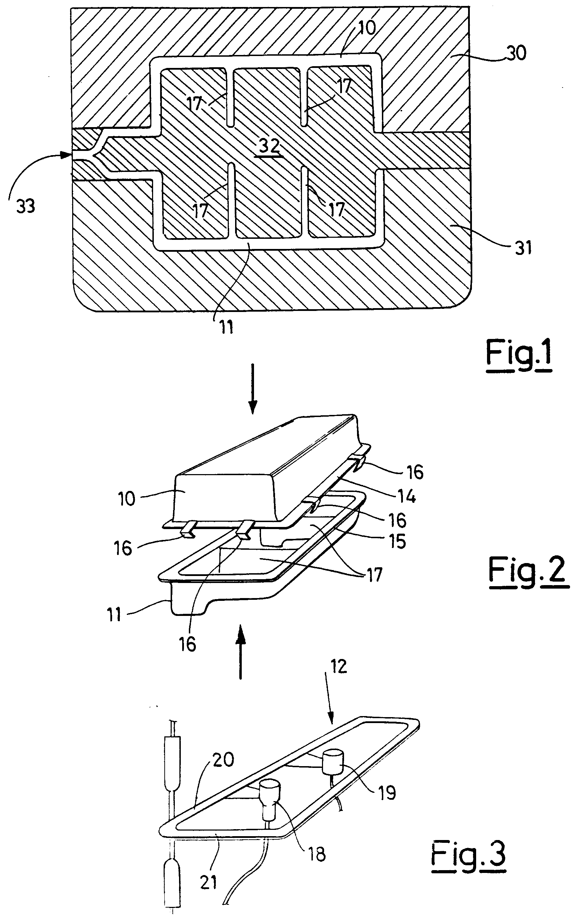

Referring initially to figures 2 and 3, the fuel tank according to this invention is basically composed of two complementary half shells (10 and 11) and an auxiliary frame (12) equipped with various accessories.

Both the upper and lower half shells (10,11) are formed by an open box-type body, with a substantially parallelepiped shape, made of polymeric thermoplastic or thermosetting material.
The bodies (10 and 11) are both provided, on their open sides, with respective flattened perimeter edges (14 and 15) which project horizontally from their parallelepiped shaped boxes. Furthermore, the upper shell (10) has a set of snap fasteners (16) set out near the perimeter edge (14) for quick coupling to the edge of the lower half shell (11).

Inside the half shells (10 and 11) there are, integrally molded, transversal partitions (17) to limit fuel wash, besides various stiffening ribs (not shown for simplicity); externally the half shells (10 and 11) also have suitable means (not shown) of attachment to the bodywork.

With reference to figure 3, the tank according to the invention includes the installation, during manufacturing, of the auxiliary frame (12) made of rigid material; this frame is substantially rectangular in shape and such as to follow the perimeters of the edges (14 and 15) of the two half shells. The frame (12) supports a set of accessories which are: an electric fuel induction pump (18), a float (19) for fuel level monitoring and various cables and fuel feeding pipes (not shown) reaching outside the tank.

Both on the upper (20) and lower (21) surfaces of the frame (12), a layer of bonding agent is then applied in order to seal the two half shells (10 and 11) along their joining zones; to this aim, in fact, the frame (12), once complete with all its accessories, and spread with the bonding agent, is interposed between the perimeter edges (14 and 15) of the two half shells which are thus joined together.

Regarding the production method of the tank according to the invention, reference is made to figure 1 in which a diagram of the mold section of a vertical press is shown, composed of: an upper plate (30), which forms the female of the upper half shell (10); a lower plate (31), which forms the female of the lower half shell (11); a central punch (32), interposed between said plates (30 and 31), which forms the male of both half shells (10 and 11). When the press is closed, as shown in figure 1, the punch forms, together with the upper plate (30) and the lower plate (31), the two respective cavities which serve as die impression for the molding of the respective half shells (10 and 11).

The tank manufacturing process goes through the following phases:
a) First the press is closed and injection of the melted material into the mold through a nozzle (33) located in the punch (32) is performed, using known technology.
b) then, when the half shells (10 and 11) have solidified, the plates (30 and 31) are drawn away and the punch (32) is extracted from the two half shells;
c) the auxiliary frame (12), onto which the various accessories (electric pump, float, tubes, cables) had previously been fitted, and to which, subsequently, the perimeter bonding agent had been applied and undergone polymerization treatment using known technology, is positioned on the lower half shell (11).
d) the half shells (10 and 11), positioned in the mold are brought together by closing the press.
e) the joining of the two half shells is carried out by means of snap fasteners (16) and the tank thus completed is extracted from the press.

As it will be appreciated, the tank according to the invention offers the following advantages over tanks obtained through blow-molding:
- possibility to use different types of material;
- absence of scrap to be recycled;
- possibility to obtain an integral molding complete of partitions to limit fuel wash, stiffening ribs and attachment means to the bodywork;
- possibility to include metal inserts;
- realization of two distinct half shells and therefore the possibility of preparing separately a frame to support all the accessories, which is then positioned once the mold is open;
- extreme ease in applying anti porous treatments to the inside of the tank;
- reduction in production time: in fact the average time for a blow molding cycle is 2 min. and 25 sec. (including the impermeabilization treatment), while, for an injection molding cycle, one min.and 45 sec. is sufficient (from the injection of the material to the extraction of the tank complete with accessories).

Obviously the invention is not limited to the realizations described and shown here, which are to be considered as simply illustrative of the best way to realize the invention, and which can be modified regarding shape, dimensions and layout of parts and manufacturing details and operation. The invention is instead intended to embrace any modification within its technical field, as defined in the following claims.

## Claims

1. An autovehicle fuel tank, obtained by joining two complementary half shells (10,11) provided with respective flattened edges (14,15) suitable for bonding, wherein the half shells are made of thermoplastic or thermosetting polymeric material by means of injection molding using a vertical press with a mold consisting of two plates (30,31) and an extractable punch (32), which creates together with said plates (30,31) two molding cavities for the respective half shells (10,11); characterized in that it is provided with a flattened auxiliary frame (12), which supports a set of accessories (18,19) and which has a profile which corresponds to that of said edges (14,15), and on said frame surfaces (20,21) bonding material is applied; said frame (12) being interposed between said edges (14,15) of said half shells.

2. A fuel tank according to claim 1, characterized in that means of quick coupling (16) are provided, set out in correspondence to said edges (14,15) and suitable for holding the two half shells firmly together following the interposition of the frame (12).

3. A fuel tank according to claim 1, characterized in that said means of quick coupling (16) consist of a set of snap fasteners set out on the half shell (10) close to the perimeter edge (14) for quick coupling to the edge (15) of the other half shell (11).

4. A fuel tank according to claim 1, characterized in that said accessories (18,19) consisting of an electric fuel induction pump, a float for fuel level monitoring, cables and fuel feeding pipes.

5. A process for the manufacturing of autovehicle fuel tanks of the type consisting of two complementary half shells (10,11) made of thermoplastic and/or thermosetting polymeric material bonded together, by means of injection molding carried out by a vertical press with a mold consisting of two plates (30,31) and an extractable punch (32) which creates together with said plates (30,31) two molding cavities for the respective half shells (10,11), said process providing for:
a) molding of the two half shells (10,11) in said cavity;
b) opening of the press and extraction of the punch (32) from inside it.
c) closure of the press for sufficient time to create reciprocal adhesion of said half shells (10,11);
the process according to the invention being furthermore characterized in that between the said phases b) and c) there is performed the interposition, between the half shells (10,11), of an auxiliary frame (12), supporting a set of accessories (18,19), which follows the edges of the half shells (10,11) to which it is made to adhere by means of bonding agents.
